# FASCICULE DE BREVET EUROPEEN

(11) **EP 3 742 018 B1**
(45) Date de publication et mention de la délivrance du brevet: **24.11.2021**
(21) Numéro de dépôt: 20175266.4
(22) Date de dépôt: 18.05.2020
(51) Int. Cl.: F16F 13/10

(54) **SUPPORT ANTIVIBRATOIRE HYDRAULIQUE**
HYDRAULISCHES SCHWINGUNGSDÄMPFENDES LAGER
HYDRAULIC ANTI-VIBRATION MOUNTING

(30) Priorité: 24.05.2019 FR 1905508
(43) Date de publication de la demande: 25.11.2020
(73) Titulaire: HUTCHINSON, 75008 Paris (FR)
(72) Inventeur: MEUNIER, David, 28200 CHATEAUDUN CEDEX (FR)
(74) Mandataire: Plasseraud IP

(56) Documents cités:
- WO-A1-2018/051627
- FR-A1- 3 027 361

## Description

### Domaine technique

La présente description concerne les supports antivibratoires hydrauliques.

En particulier la présente description concerne un support antivibratoire hydraulique destiné à être interposé aux fins d'amortissement entre des premier et deuxième éléments rigides, ce support antivibratoire hydraulique comprenant :
- une première armature et une deuxième armature destinées à être fixées aux deux éléments rigides à réunir,
- un corps en élastomère qui relie la première armature à la deuxième armature et qui délimite au moins partiellement une chambre de travail,
- une première chambre de compensation déformable,
- une deuxième chambre de compensation déformable,
- un passage étranglé s'étendant longitudinalement entre une première extrémité communiquant avec la chambre de travail et une deuxième extrémité communiquant avec la deuxième chambre de compensation,
- la chambre de travail, la première chambre de compensation, la deuxième chambre de compensation et le passage étranglé formant un volume hydraulique rempli de liquide.

### Technique antérieure

Un tel support antivibratoire est connu par exemple du document FR3027361A1, où chacune des chambres de compensation est reliée à la chambre de travail par un passage étranglé qui lui est propre.

Par ailleurs, le document WO2018051627A1 indique, selon son abrégé, qu'un dispositif antivibration selon la présente invention est pourvu d'un premier élément de fixation cylindrique et d'un second élément de fixation cylindrique, d'un corps élastique et d'un élément de séparation qui sépare une chambre de liquide dans le premier élément de fixation en une chambre de liquide principale et une chambre de liquide auxiliaire. L'élément de séparation est pourvu d'une membrane qui fait partie d'une paroi de division de la chambre de liquide principale et d'une chambre intermédiaire qui est positionnée sur le côté opposé à la chambre à liquide principale par rapport à la membrane. L'élément de séparation comporte un premier orifice qui relie la chambre de liquide principale et la chambre de liquide auxiliaire ; un deuxième orifice qui relie la chambre intermédiaire et la chambre de liquide auxiliaire ; et une ouverture partagée qui sert d'ouverture, du côté de la chambre de liquide auxiliaire, pour le premier orifice et le deuxième orifice.

### Résumé

Un objectif de la présente description est notamment de proposer un support antivibratoire de structure moins complexe que celui du document FR3027361 A1.

A cet effet, le passage étranglé comporte une ouverture intermédiaire communiquant avec la première chambre de compensation, le passage étranglé présentant un premier tronçon qui s'étend longitudinalement entre la première extrémité et l'ouverture intermédiaire et un deuxième tronçon qui s'étend longitudinalement entre l'ouverture intermédiaire et la deuxième extrémité,
et la chambre de travail, la première chambre de compensation et la deuxième chambre de compensation sont superposées selon un axe central, la chambre de travail étant séparée de la première chambre de compensation par une cloison rigide, la première chambre de compensation étant séparée de la deuxième chambre de compensation par une membrane intermédiaire en élastomère sensiblement perpendiculaire à l'axe central, la deuxième chambre de compensation étant délimitée entre la membrane intermédiaire en élastomère et un soufflet en élastomère.

Ainsi, le support antivibratoire hydraulique fonctionne avec deux fréquences de résonnance différentes du passage étranglé, l'une correspondant au premier tronçon et l'autre correspondant à toute la longueur du passage étranglé. Le support antivibratoire peut ainsi, sans avoir besoin d'être piloté, amortir très efficacement deux types de mouvements vibratoires du véhicule, aux deux fréquences de résonance susmentionnées.

Le support antivibratoire ayant un seul passage étranglé, il est de structure particulièrement simple et donc peu encombrant et peu coûteux. De façon surprenante, les flux de liquide dans le premier tronçon, vers et de la première chambre de compensation et vers et de la deuxième chambre de compensation, ne se perturbent pas l'un l'autre et donc le support antivibratoire est aussi efficace que s'il avait deux passages étranglés séparés correspondant respectivement à la première chambre de compensation et à la deuxième chambre de compensation.

Dans des modes de réalisation préférés, on peut éventuellement avoir recours en outre à l'une et/ou à l'autre des dispositions suivantes :
- la membrane intermédiaire en élastomère est librement déformable (sans être limitée par des grilles ou autres butées) selon l'axe central ;
- le passage étranglé est délimité dans la cloison rigide ;
- la cloison rigide comporte un premier élément de cloison séparant la chambre de travail et la première chambre de compensation, et un deuxième élément de cloison vers la deuxième chambre de compensation, le premier élément de cloison comportant une première ouverture qui fait communiquer le premier tronçon avec la chambre de travail et le deuxième élément de cloison comportant une deuxième ouverture que fait communiquer le deuxième tronçon avec la deuxième chambre de compensation, le premier élément de cloison délimitant au moins partiellement le premier tronçon et le deuxième élément de cloison délimitant au moins partiellement le deuxième tronçon ;
- la première armature a la forme d'un plot et la deuxième armature a une forme annulaire centrée sur ledit axe central, la première armature étant disposée sensiblement sur ledit axe central, le corps en élastomère présentant une forme en cloche, ayant un sommet solidaire de la première armature et une base annulaire solidaire de la deuxième armature ;
- la première chambre de compensation présente une plus grande raideur de gonflement que la deuxième chambre de compensation ;
- la première chambre de compensation et la deuxième chambre de compensation présentent chacune une raideur de gonflement inférieure à la chambre de travail ;
- le premier tronçon du passage étranglé a une première fréquence de résonance comprise entre 10 et 20 Hz et le passage étranglé complet a une deuxième fréquence de résonance inférieure à la première fréquence de résonance et comprise entre 5 et 10 Hz.

### Brève description des dessins

D'autres caractéristiques et avantages apparaîtront au cours de la description suivante de quatre formes de réalisation, données à titre d'exemples non limitatifs, en regard des dessins joints.

Sur les dessins :
Fig. 1

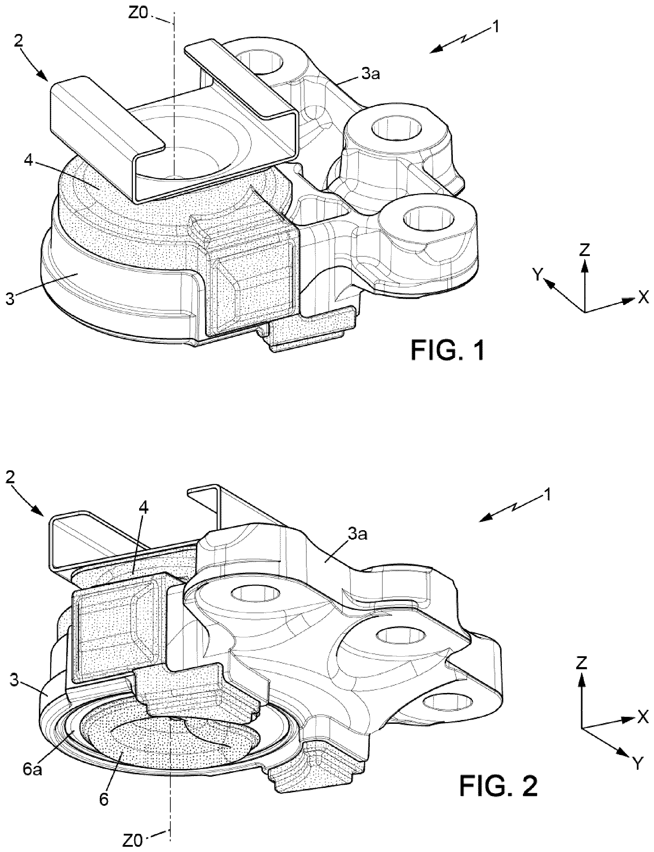

   [Fig. 1] la figure 1 est une vue en perspective d'un support antivibratoire selon une forme de réalisation, vu selon une première direction ;
Fig. 2
   [Fig. 2] la figure 2 est une vue en perspective du support antivibratoire de la figure 1, vu selon une deuxième direction ;
Fig. 3

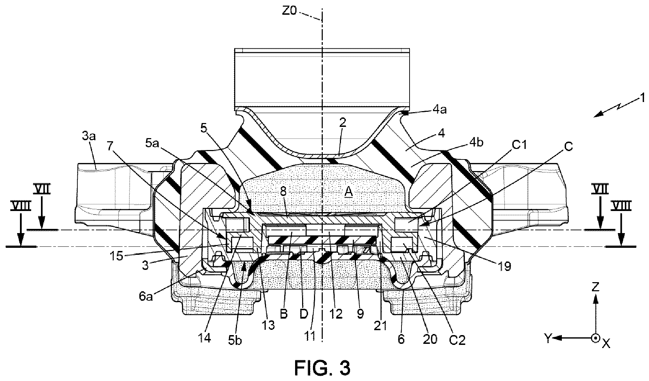

   [Fig. 3] la figures 3 est une vue en coupe axiale du support antivibratoire de la figure 1 ;
Fig. 4

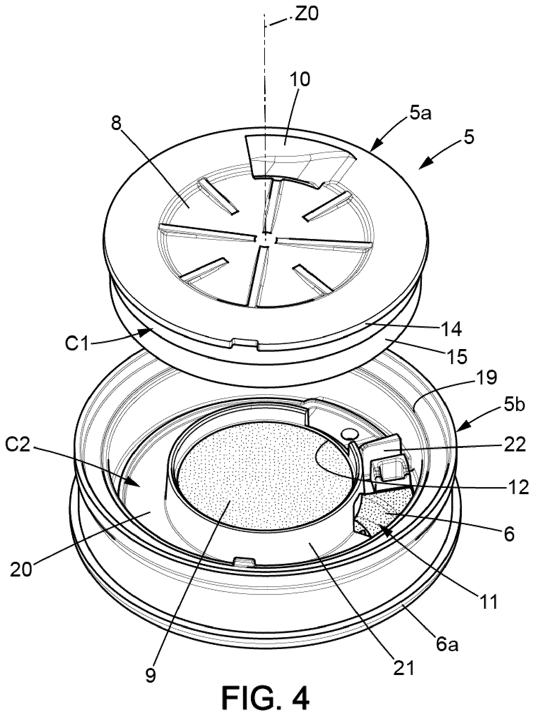

   [Fig. 4] la figure 4 est une vue en perspective éclatée de la cloison rigide du support antivibratoire de la figure 1 avec la membrane intermédiaire montée sur ladite cloison rigide ;
Fig. 5

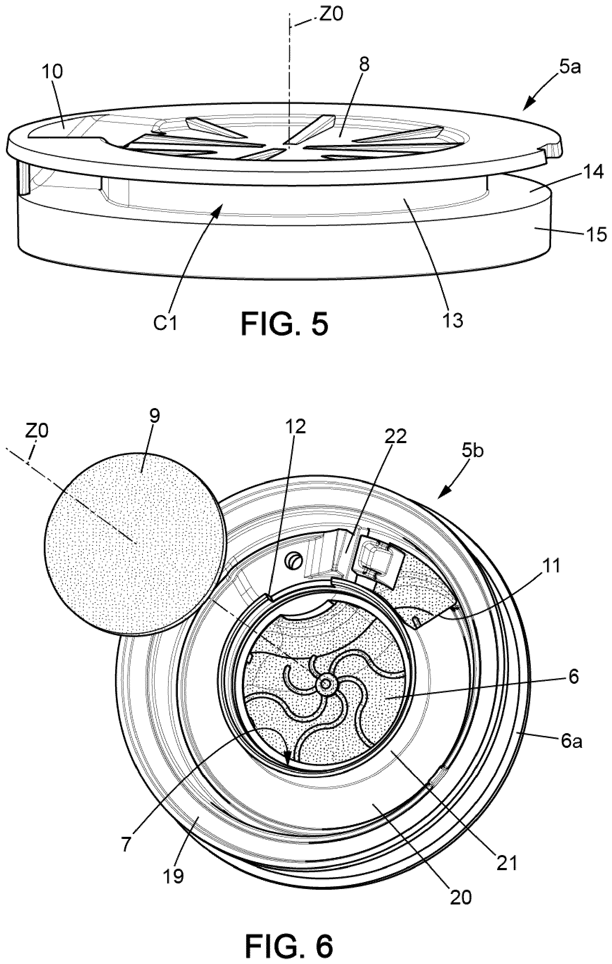

   [Fig. 5] la figure 5 est une vue en perspective du premier élément de cloison du support antivibratoire de la figure 1 ;
**Fig. 6**
   [Fig. 6] la figure 6 est une vue en perspective éclatée montrant le deuxième élément de cloison et la membrane intermédiaire est une vue en perspective éclatée de la cloison rigide du support antivibratoire de la figure 1 ;
**Fig. 7**

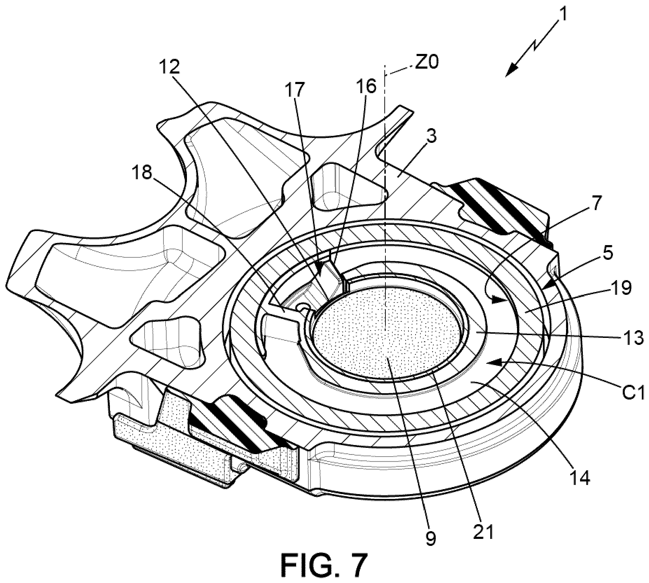

   [Fig. 7] la figure 7 est une vue en coupe selon le plan VII-VII de la figure 3 ; et
**Fig. 8**

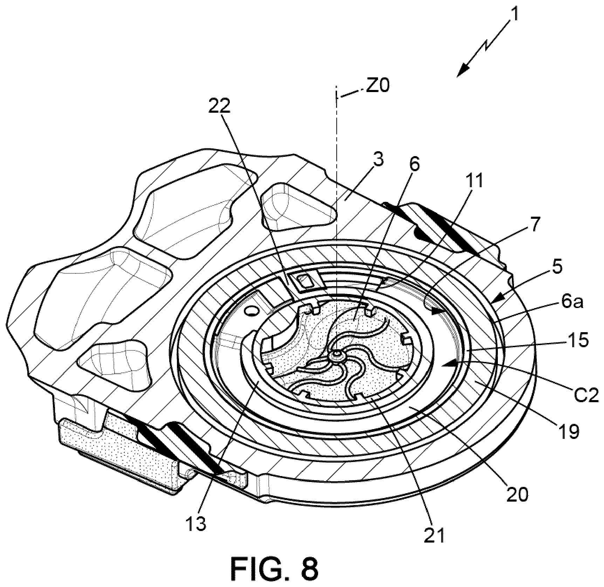

   [Fig. 8] la figure 8 est une vue en coupe selon le plan VIII-VIII de la figure 3.
**Fig. 9**

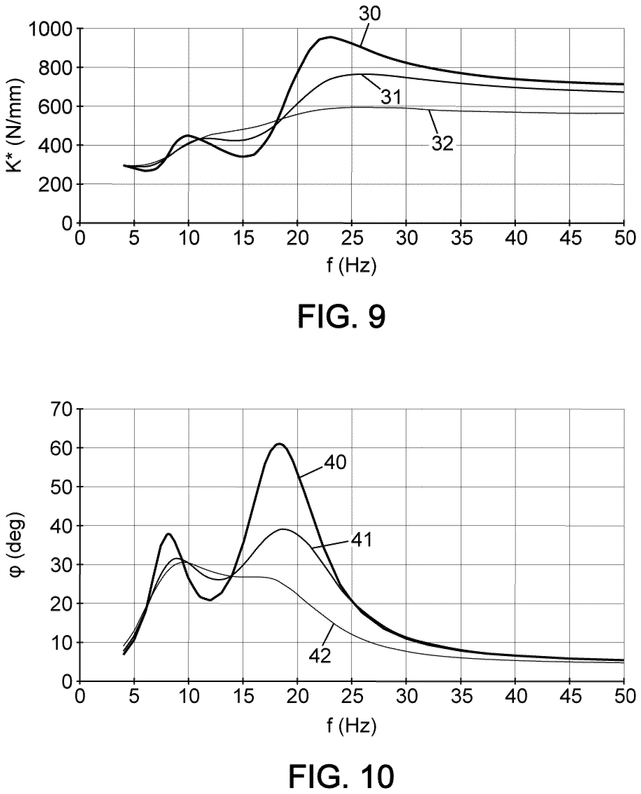

   [Fig. 9] la figure 9 montre des courbes de raideur dynamique du support antivibratoire de la figure 1, pour différentes amplitudes de vibration.
**Fig. 10**
   [Fig. 10] la figure 10 montre des courbes de phase du support antivibratoire de la figure 1, pour différentes amplitudes de vibration.

### Description plus détaillée

Sur les différentes figures, les mêmes références désignent des éléments identiques ou similaires.

Les figures 1 à 3 représentent un support antivibratoire hydraulique 1, destiné à être interposé aux fins d'amortissement entre des premier et deuxième éléments rigides. Les premier et deuxième éléments rigides peuvent être notamment l'un, le moteur d'un véhicule automobile et l'autre, la caisse du véhicule automobile.

Le support antivibratoire 1 comprend une première armature rigide 2, une deuxième armature rigide 3 et un corps en élastomère 4.

La première armature rigide 2 peut présenter par exemple la forme d'un plot métallique ou en matière plastique. Elle est destinée par exemple à être fixée au moteur du véhicule. La première armature 2 susmentionnée peut être disposée sensiblement sur un axe central Z0. L'axe central Z0 peut être par exemple sensiblement parallèle à une direction verticale Z en position d'utilisation.

La deuxième armature rigide 3 peut être par exemple une armature annulaire centrée sur l'axe central Z0. La deuxième armature rigide 3 peut s'étendre sensiblement selon un plan horizontal XY en position d'utilisation. La deuxième armature rigide 3 peut être réalisée notamment en métal ou le cas échéant en matière plastique. La deuxième armature rigide 3 est destinée à être fixée par exemple à la caisse du véhicule, notamment par l'intermédiaire d'une console 3a ou autre organe de fixation qui, dans l'exemple représenté, est formé d'une seule pièce avec la deuxième armature rigide 3.

Le corps en élastomère 4 peut présenter par exemple une forme de cloche qui s'étend axialement selon l'axe central Z0, entre un sommet 4a adhérisé et surmoulé sur la première armature rigide 2 et une base annulaire 4b surmoulée et adhérisée sur la deuxième armature rigide 3.

Le corps en élastomère 4 est capable de supporter notamment les efforts statiques dus au poids du moteur du véhicule et de se déformer élastiquement notamment selon l'axe central Z0 au cours du fonctionnement du véhicule, selon les mouvements vibratoires du moteur par rapport à la caisse du véhicule, qui sont dus au fonctionnement du moteur et / ou au roulage du véhicule.

Comme représenté sur la figure 3, le support antivibratoire 1 comporte en outre une cloison rigide 5 qui est solidarisée avec la deuxième armature rigide 3 et appliquée de façon étanche contre la base 4b du corps en élastomère, en délimitant avec celui-ci une chambre de travail A hydraulique. La cloison rigide 5 peut notamment être réalisée en métal ou en matière plastique.

Un soufflet en élastomère 6 est solidarisé avec la deuxième armature rigide 3 et appliquée de façon étanche contre la cloison rigide 5 à l'opposé de la chambre de travail A. La périphérie du soufflet en élastomère 6 peut par exemple être surmoulée et adhérisée sur une bague de fixation 6a engagée autour de et sous la cloison rigide 5. Le soufflet en élastomère 6 délimite de façon étanche avec le corps en élastomère 4, un volume hydraulique rempli de liquide, , notamment du glycol ou autre. Ce volume hydraulique comprend la chambre de travail A susmentionnée, une première chambre de compensation B déformable, un passage étranglé C et une deuxième chambre de compensation D déformable qui vont maintenant être décrits plus en détail.

Comme représenté sur les figures 3 à 8, la première chambre de compensation B et le passage étranglé C peuvent être formés à l'intérieur de la cloison rigide 5, tandis que la chambre de travail A est délimitée entre la cloison rigide 5 et le corps en élastomère 4 et la deuxième chambre de compensation est située entre la cloison rigide 5 et le soufflet en élastomère 6. La chambre de travail A, la première chambre de compensation B et la deuxième chambre de compensation D sont donc superposées selon l'axe central Z0.

Plus particulièrement, le passage étranglé C peut être formé dans une partie périphérique 7 de la cloison rigide 5, et la première chambre de compensation B peut être formée à l'intérieur de ladite partie périphérique 7.

La première chambre de compensation B peut être séparée :
- de la chambre de travail A par une plaque rigide 8 radiale appartenant à la cloison rigide 5,
- et de la deuxième chambre de compensation D par une membrane intermédiaire en élastomère 9 déformable.

La membrane intermédiaire en élastomère 9 peut présenter une forme de disque disposé radialement par rapport à l'axe central Z0, dont la périphérie est solidarisée à la partie périphérique 7 de la cloison 5, par exemple par adhérisation.

La membrane intermédiaire en élastomère 9 peut être librement déformable selon l'axe central Z0 avec une amplitude de déformation déterminée par sa propre élasticité, sans être limitée par des grilles ou autres butées.

Le passage étranglé C s'étend longitudinalement (c'est-à-dire dans le sens de sa longueur) entre une première extrémité communiquant par une première ouverture 10 avec la chambre de travail A et une deuxième extrémité communiquant par une deuxième ouverture 11 avec la deuxième chambre de compensation D. Le passage étranglé C comporte en outre une ouverture intermédiaire 12 communiquant avec la première chambre de compensation B, le passage étranglé C présentant un premier tronçon C1 qui s'étend longitudinalement entre la première extrémité et l'ouverture intermédiaire 12 et un deuxième tronçon C2 qui s'étend longitudinalement entre l'ouverture intermédiaire 12 et la deuxième extrémité.

La longueur totale du passage étranglé C et la longueur du premier tronçon C1 déterminent une première fréquence de résonance f1 du premier tronçon C1 et une deuxième fréquence de résonance f2 de l'ensemble du passage étranglé C. La deuxième fréquence de résonance f2 est inférieure à la première fréquence de résonance f1. La première fréquence de résonance f1 peut être comprise par exemple entre 10 et 20 Hz et la deuxième fréquence de résonance f2 peut être comprise par exemple entre 5 et 10 Hz.

Dans l'exemple représenté, le passage étranglé C s'étend sur plus d'un tour, par exemple environ 2 tours autour de l'axe central Z0, le premier tronçon C1 et le deuxième tronçon C2 étant superposés axialement.

La cloison rigide 5 peut comporter un premier élément de cloison 5a et un deuxième élément de cloison 5b superposés selon l'axe central Z0.

Le premier élément de cloison 5a comporte la plaque radiale 8 susmentionnée et délimite la chambre de travail A avec le corps en élastomère 4. La première ouverture 10 peut être formée dans ladite plaque radiale 8.

Le premier élément de cloison 5a peut comporter les parties suivantes, formées d'une seule pièce avec la plaque radiale 8 :
- une paroi annulaire interne 13 s'étendant axialement vers le soufflet en élastomère 6 à partir de la plaque radiale 8 sur sensiblement toute l'épaisseur de la cloison rigide 5,
- une couronne 14 s'étendant radialement vers l'extérieur à partir de la paroi annulaire interne 13, depuis une position intermédiaire entre la plaque radiale 8 et l'extrémité libre de la paroi annulaire 13,
- une paroi annulaire externe 15 qui s'étend axialement depuis la périphérie extérieure de la couronne 14, jusqu'à une extrémité libre.

La couronne 15 est interrompue par une ouverture 16 délimitant un passage intermédiaire 17 entre le premier tronçon C1 et le deuxième tronçon C2, et une paroi de séparation 18 sépare ce passage intermédiaire de la première ouverture 10.

Le deuxième élément de cloison 5b est disposé vers le soufflet en élastomère 6 à l'opposé du premier élément de cloison 5a. Le deuxième élément de cloison 5b comporte les parties suivantes, formées d'une seule pièce :
- une paroi annulaire externe 19 s'étendant axialement sur sensiblement toute l'épaisseur de la cloison rigide 5, entre une première extrémité située vers le soufflet en élastomère 6 et une extrémité libre en appui sous la plaque radiale 8,
- une paroi de fond 20 annulaire, s'étendant radialement vers l'intérieur à partir de la première extrémité de la paroi annulaire externe 19,
- une paroi annulaire interne 21, qui s'étend axialement depuis le bord intérieur de la paroi de fond 20 jusqu'à une extrémité libre en appui sous la plaque radiale 8.

La paroi annulaire interne 21 est interrompue, dans sa partie supérieure correspondant à la hauteur du premier tronçon C1 du passage étranglé C, au nouveau de l'ouverture intermédiaire 12.

La paroi de fond 20 et la partie inférieure de la paroi annulaire interne 21 (sur l'épaisseur du deuxième tronçon C2 du passage étranglé C) présentent un évidement au niveau de la deuxième ouverture 11.

Le deuxième élément de cloison 5b comporte en outre une paroi de séparation 22 qui sépare le passage intermédiaire 17 de la deuxième ouverture 11.

La première chambre de compensation B est donc délimitée entre la plaque radiale 8, la membrane intermédiaire en élastomère 9 et la paroi annulaire interne 21, tandis que le premier tronçon C1 est délimité entre la plaque radiale 8, la paroi annulaire interne 13, la paroi annulaire externe 19 et la couronne 14, et le deuxième tronçon C2 est délimité entre la couronne 14, la paroi de fond 20, la paroi annulaire interne 13 et la paroi annulaire externe 15.

La première chambre de compensation B peut éventuellement présenter une plus grande raideur de gonflement que la deuxième chambre de compensation D. Par raideur de gonflement d'une chambre A, B, D, on entend la pente de la courbe de la pression du liquide contenu dans cette chambre, en fonction du volume de la chambre en question.

La première chambre de compensation B et la deuxième chambre de compensation D présentent chacune une raideur de gonflement inférieure à la chambre de travail A.

Le support antivibratoire hydraulique 1 qui vient d'être décrit peut amortir très efficacement deux types de mouvements vibratoires du véhicule, aux deux fréquences de résonance f1, f2 susmentionnées. Cette efficacité est bien visible sur les courbes des figures 9 et 10, où :
- les courbes 30-32 de la figure 9 montrent la raideur dynamique du support antivibratoire hydraulique 1 selon l'axe Z0 en fonction de la fréquence de vibration, respectivement pour des amplitudes de vibration de 0,1 mm, 0,5 mm et 1 mm, cette raideur présentant des creux respectivement vers 7 Hz et 15 Hz,
- les courbes 40-42 de la figure 9 montrent la phase du support antivibratoire hydraulique 1 selon l'axe Z0 en fonction de la fréquence de vibration, respectivement pour des amplitudes de vibration de 0,1 mm, 0,5 mm et 1 mm.

## Revendications

1. Support antivibratoire hydraulique (1) destiné à être interposé aux fins d'amortissement entre des premier et deuxième éléments rigides, ce support antivibratoire hydraulique (1) comprenant :
- une première armature (2) et une deuxième armature (3) destinées à être fixées aux deux éléments rigides à réunir,
- un corps en élastomère (4) qui relie la première armature (2) à la deuxième armature (3) et qui délimite au moins partiellement une chambre de travail (A),
- une première chambre de compensation (B) déformable,
- une deuxième chambre de compensation déformable (D),
- un passage étranglé (C) s'étendant longitudinalement entre une première extrémité communiquant avec la chambre de travail (A) et une deuxième extrémité communiquant avec la deuxième chambre de compensation (D),
- la chambre de travail (A), la première chambre de compensation (B), la deuxième chambre de compensation (D) et le passage étranglé (C) formant un volume hydraulique rempli de liquide,
dans lequel le passage étranglé (C) comporte une ouverture intermédiaire (12) communiquant avec la première chambre de compensation (B), le passage étranglé (C) présentant un premier tronçon (C1) qui s'étend longitudinalement entre la première extrémité et l'ouverture intermédiaire (12) et un deuxième tronçon (C2) qui s'étend longitudinalement entre l'ouverture intermédiaire (12) et la deuxième extrémité
et dans lequel la chambre de travail (A), la première chambre de compensation (B) et la deuxième chambre de compensation (D) sont superposées selon un axe central (Z0), la chambre de travail (A) étant séparée de la première chambre de compensation (B) par une cloison rigide (5), le support antivibratoire hydraulique étant **caractérisé en ce que** la première chambre de compensation (B) est séparée de la deuxième chambre de compensation (D) par une membrane intermédiaire en élastomère (9) sensiblement perpendiculaire à l'axe central (Z0), et la deuxième chambre de compensation (D) est délimitée entre la membrane intermédiaire en élastomère (9) et un soufflet en élastomère (6).

2. Support antivibratoire hydraulique (1) selon la revendication 1, dans lequel la membrane intermédiaire en élastomère (9) est librement déformable selon l'axe central (Z0).

3. Support antivibratoire hydraulique (1) selon la revendication 1 ou la revendication 2, dans lequel le passage étranglé (C) est délimité dans la cloison rigide (5).

4. Support antivibratoire hydraulique (1) selon l'une quelconque des revendications 1 à 3, dans lequel la cloison rigide (5) comporte un premier élément de cloison (5a) séparant la chambre de travail (A) et la première chambre de compensation (B), et un deuxième élément de cloison (5b) vers la deuxième chambre de compensation (D), le premier élément de cloison (5a) comportant une première ouverture (10) qui fait communiquer le premier tronçon (C1) avec la chambre de travail (A) et le deuxième élément de cloison (5b) comportant une deuxième ouverture (11) que fait communiquer le deuxième tronçon (C2) avec la deuxième chambre de compensation (D), le premier élément de cloison (5a) délimitant au moins partiellement le premier tronçon (C1) et le deuxième élément de cloison (5b) délimitant au moins partiellement le deuxième tronçon (C2).

5. Support antivibratoire hydraulique (1) selon l'une quelconque des revendications 1 à 4, dans lequel la première armature (2) a la forme d'un plot et la deuxième armature (3) a une forme annulaire centrée sur ledit axe central (Z0), la première armature (2) étant disposée sensiblement sur ledit axe central (Z0), le corps en élastomère (4) présentant une forme en cloche, ayant un sommet (4a) solidaire de la première armature (2) et une base annulaire (4b) solidaire de la deuxième armature (3).

6. Support antivibratoire hydraulique (1) selon l'une quelconque des revendications précédentes, dans lequel la première chambre de compensation (B) présente une plus grande raideur de gonflement que la deuxième chambre de compensation (D).

7. Support antivibratoire hydraulique (1) selon l'une quelconque des revendications précédentes, dans lequel la première chambre de compensation (B) et la deuxième chambre de compensation (D) présentent chacune une raideur de gonflement inférieure à la chambre de travail (A).

8. Support antivibratoire hydraulique (1) selon l'une quelconque des revendications précédentes, dans lequel le premier tronçon (C1) du passage étranglé a une première fréquence de résonance comprise entre 10 et 20 Hz et le passage étranglé (C) complet a une deuxième fréquence de résonance inférieure à la première fréquence de résonance et comprise entre 5 et 10 Hz.

## Patentansprüche

1. Hydraulische Schwingungsdämpfer-Stütze (1), die dazu bestimmt ist, zu Dämpfungszwecken zwischen einem ersten und einem zweiten starren Element angeordnet zu werden, wobei die hydraulische Schwingungsdämpfer-Stütze (1) umfasst:
- ein erstes Gestell-Bauteil (2) und ein zweites Gestell-Bauteil (3), die dazu bestimmt sind, an den beiden zu verbindenden starren Elementen befestigt zu werden,
- einen Elastomer-Körper (4), der das erste Gestell-Bauteil (2) mit dem zweiten Gestell-Bauteil (3) verbindet, und der zumindest teilweise eine Arbeitskammer (A) begrenzt,
- eine erste verformbare Ausgleichskammer (B),
- eine zweite verformbare Ausgleichskammer (D),
- einen Drosselkanal (C), der sich in Längsrichtung zwischen einem ersten Ende, das mit der Arbeitskammer (A) in Verbindung steht, und einem zweiten Ende erstreckt, das mit der zweiten Ausgleichskammer (D) in Verbindung steht,
- wobei die Arbeitskammer (A), die erste Ausgleichskammer (B), die zweite Ausgleichskammer (D) und der Drosselkanal (C) ein mit Flüssigkeit gefülltes Hydraulikvolumen bilden,
wobei der Drosselkanal (C) eine Zwischenöffnung (12) aufweist, die mit der ersten Ausgleichskammer (B) in Verbindung steht, wobei der Drosselkanal (C) einen ersten Abschnitt (C1) aufweist, der sich in Längsrichtung zwischen dem ersten Ende und der Zwischenöffnung (12) erstreckt, und einen zweiten Abschnitt (C2) aufweist, der sich in Längsrichtung zwischen der Zwischenöffnung (12) und dem zweiten Ende erstreckt,
und wobei die Arbeitskammer (A), die erste Ausgleichskammer (B) und die zweite Ausgleichskammer (D) entlang einer Mittelachse (Z0) übereinander angeordnet sind, wobei die Arbeitskammer (A) von der ersten Ausgleichskammer (B) durch eine starre Trennwand (5) getrennt ist,
wobei die hydraulische Schwingungsdämpfer-Stütze **dadurch gekennzeichnet ist, dass** die erste Ausgleichskammer (B) von der zweiten Ausgleichskammer (D) durch eine Elastomer-Zwischenmembran (9) im Wesentlichen senkrecht zur Mittelachse (Z0) getrennt ist, und die zweite Ausgleichskammer (D) zwischen der Elastomer-Zwischenmembran (9) und einem Elastomer-Balg (6) begrenzt ist.

2. Hydraulische Schwingungsdämpfer-Stütze (1) nach Anspruch 1, wobei die Elastomer-Zwischenmembran (9) entlang der Mittelachse (Z0) frei verformbar ist.

3. Hydraulische Schwingungsdämpfer-Stütze (1) nach Anspruch 1 oder Anspruch 2, wobei der Drosselkanal (C) in der starren Trennwand (5) begrenzt ist.

4. Hydraulische Schwingungsdämpfer-Stütze (1) nach einem der Ansprüche 1 bis 3, wobei die starre Trennwand (5) ein erstes Trennwandelement (5a) umfasst, das die Arbeitskammer (A) und die erste Ausgleichskammer (B) trennt, und ein zweites Trennelement (5b) zur zweiten Ausgleichskammer (D) hin umfasst, wobei das erste Trennelement (5a) eine erste Öffnung (10) umfasst, die den ersten Abschnitt (C1) mit der Arbeitskammer (A) in Verbindung setzt, und wobei das zweite Trennwand-Element (5b) eine zweite Öffnung (11) umfasst, die den zweiten Abschnitt (C2) mit der zweiten Ausgleichskammer (D) in Verbindung setzt, wobei das erste Trennwand-Element (5a) den ersten Abschnitt (C1) zumindest teilweise begrenzt, und das zweite Trennwand-Element (5b) den zweiten Abschnitt (C2) zumindest teilweise begrenzt.

5. Hydraulische Schwingungsdämpfer-Stütze (1) nach einem der Ansprüche 1 bis 4, wobei das erste Gestell-Bauteil (2) die Form eines Pylons hat und das zweite Gestell-Bauteil (3) eine ringförmige Form hat, die auf der Mittelachse (Z0) zentriert ist, wobei das erste Gestell-Bauteil (2) im Wesentlichen auf der Mittelachse (Z0) angeordnet ist, wobei der Elastomer-Körper (4) eine Glockenform aufweist, mit einer fest mit dem ersten Gestell-Bauteil (2) verbundenen Spitze (4a) und einer ringförmigen Basis (4b), die fest mit dem zweiten Gestell-Bauteil (3) verbunden ist.

6. Hydraulische Schwingungsdämpfer-Stütze (1) nach einem der vorhergehenden Ansprüche, wobei die erste Ausgleichskammer (B) eine größere Aufblähsteifigkeit aufweist als die zweite Ausgleichskammer (D).

7. Hydraulische Schwingungsdämpfer-Stütze (1) nach einem der vorhergehenden Ansprüche, wobei die erste Ausgleichskammer (B) und die zweite Ausgleichskammer (D) jeweils eine geringere Aufblähsteifigkeit als die Arbeitskammer (A) aufweisen.

8. Hydraulische Schwingungsdämpfer-Stütze (1) nach einem der vorhergehenden Ansprüche, wobei der erste Abschnitt (C1) des Drosselkanals eine erste Resonanzfrequenz aufweist, die mindestens 10 und nicht mehr als 20 Hz beträgt, und der vollständige Drosselkanal (C) eine zweite Resonanzfrequenz aufweist, die niedriger als die erste Resonanzfrequenz ist und mindestens 5 und nicht mehr als 10 Hz beträgt.

## Claims

1. A hydraulic anti-vibration support (1) intended to be interposed for damping purposes between first and second rigid elements, this hydraulic anti-vibration support (1) comprising:
- a first frame (2) and a second frame (3) intended to be fixed to the two rigid elements to be joined,
- an elastomeric body (4) which connects the first frame (2) to the second frame (3) and which at least partially defines a working chamber (A),
- a first deformable compensation chamber (B),
- a second deformable compensation chamber (D),
- a constricted passage (C) extending longitudinally between a first end communicating with the working chamber (A) and a second end communicating with the second compensation chamber (D),
- the working chamber (A), the first compensation chamber (B), the second compensation chamber (D) and the constricted passage (C) forming a hydraulic volume filled with liquid,
wherein the constricted passage (C) includes an intermediate opening (12) communicating with the first compensation chamber (B), the constricted passage (C) having a first section (C1) which extends longitudinally between the first end and the intermediate opening (12) and a second section (C2) which extends longitudinally between the intermediate opening (12) and the second end
and wherein the working chamber (A), the first compensation chamber (B) and the second compensation chamber (D) are superimposed along a central axis (ZO), the working chamber (A) being separated from the first compensation chamber (B) by a rigid partition (5), the hydraulic anti-vibration support being **characterised in that** the first compensation chamber (B) is separated from the second compensation chamber (D) by an intermediate elastomeric membrane (9) substantially perpendicular to the central axis (ZO), and the second compensation chamber (D) is delimited between the intermediate elastomeric membrane (9) and an elastomeric bellows (6).

2. The hydraulic anti-vibration support (1) according to claim 1, wherein the intermediate elastomeric membrane (9) is freely deformable along the central axis (Z0).

3. The hydraulic anti-vibration support (1) according to claim 1 or claim 2, wherein the constricted passage (C) is delimited in the rigid partition (5).

4. The hydraulic anti-vibration support (1) according to any one of claims 1 to 3, wherein the rigid partition (5) includes a first partition element (5a) separating the working chamber (A) and the first compensation chamber (B), and a second partition element (5b) towards the second compensation chamber (D), the first partition element (5a) including a first opening (10) which communicates the first section (C1) with the working chamber (A) and the second partition element (5b) including a second opening (11) which communicates the second section (C2) with the second compensation chamber (D), the first partition element (5a) at least partially delimiting the first section (C1) and the second partition element (5b) at least partially delimiting the second section (C2).

5. The hydraulic anti-vibration support (1) according to any one of claims 1 to 4, wherein the first frame (2) has the shape of a stud and the second frame (3) has an annular shape centred on said central axis (ZO), the first frame (2) being disposed substantially on said central axis (ZO), the elastomeric body (4) having a bell shape, having a top (4a) integral with the first frame (2) and an annular base (4b) integral with the second frame (3).

6. The hydraulic anti-vibration support (1) according to any one of the preceding claims, wherein the first compensation chamber (B) has a greater swelling stiffness than the second compensation chamber (D).

7. The hydraulic anti-vibration support (1) according to any one of the preceding claims, wherein the first compensation chamber (B) and the second compensation chamber (D) each have a swelling stiffness less than the working chamber (A).

8. The hydraulic anti-vibration support (1) according to any one of the preceding claims, wherein the first section (C1) of the constricted passage has a first resonant frequency comprised between 10 and 20 Hz and the complete constricted passage (C) has a second resonant frequency lower than the first resonant frequency and comprised between 5 and 10 Hz.
